# EUROPÄISCHE PATENTSCHRIFT

(11) **EP 1 280 962 B1**
(45) Veröffentlichungstag und Bekanntmachung des Hinweises auf die Patenterteilung: **05.11.2003**
(21) Anmeldenummer: 01944900.8
(22) Anmeldetag: 04.05.2001
(51) Int. Cl.: E01B 25/12, B60S 13/02, B61J 1/04

(54) **VORRICHTUNG ZUR RICHTUNGSÄNDERUNG VON TRANSPORTMITTELN**
DEVICE FOR CHANGING THE DIRECTION OF MEANS OF TRANSPORT
DISPOSITIF DE CHANGEMENT DE DIRECTION DE MOYENS DE TRANSPORT

(30) Priorität: 11.05.2000 DE 10022965
(43) Veröffentlichungstag der Anmeldung: 05.02.2003
(73) Patentinhaber: Koenig & Bauer Aktiengesellschaft, 97080 Würzburg (DE)
(72) Erfinder: OLBORT, Josef, Herbert, 97350 Mainbernheim (DE)
(86) Internationale Anmeldenummer: DE0101705
(87) Internationale Veröffentlichungsnummer: WO01086068

(56) Entgegenhaltungen:
- CH-A- 653 644
- DE-A- 19 708 389
- US-A- 1 249 346
- US-A- 1 800 722
- US-A- 5 086 704

## Beschreibung

Die Erfindung betrifft Vorrichtungen zur Richtungsänderung von Transportmitteln, gemäß dem Oberbegriff der Ansprüche 1 oder 7.

Durch die DE 39 10 444 C2 sind Drehtische bekannt, die zur Gleichstellung der Abrollrichtung liegend gelagerter Vorratsrollen um 180° gedreht werden können.

Aus der WO 98/12133 A1 sind schwenkbare Drehscheiben bekannt, die sich kreuzende Führungen aufweisen, und die mit Schienenstücken zur Aufnahme von Vorratsrollen-Transportwägen versehen sind. Diese Drehscheiben sind um mindestens 90° bis vorzugsweise um 360° schwenkbar, so dass die Vorratsrollen-Transportwägen zwischen sich kreuzenden Gleissträngen umgesetzt werden können.

Die DE 41-19 407 A1 offenbart Drehteller, die mittels eines Riemens über eine zwischengeschaltete Rutschkupplung angetrieben werden.

Die DE 40 06 486 A1 zeigt eine Drehscheibe für Fahrwerke, die von einem Antriebsmotor über einen Zahnriemen formschlüssig angetrieben wird.

Die DE 43 45 090 A1 beschreibt einen Drehtisch, der mittels eines Seiles reibschlüssig angetrieben wird.

Die DE 197 08 389 A1 beschreibt eine Gleisweiche, für ein gleisgebundenes Flurfördersystem. Dabei ist ein schwenkbarer Träger für ein Gleis reibschlüssig mit einem Riemen verbunden.

Durch die US 1 800 722 A ist eine Vorrichtung zur Richtungsänderung von schienengeführten Transportwagen bekannt, wobei ein schwenkbarer Teil mittels einer Kupplungseinrichtung von einer Antriebseinrichtung entkoppelbar ist.

Der Erfindung liegt die Aufgabe zugrunde, Vorrichtungen zur Richtungsänderung von Transportmitteln zu schaffen.

Die Aufgabe wird erfindungsgemäß durch die Merkmale der Ansprüche 1 oder 7 gelöst.

Die mit der Erfindung erzielbaren Vorteile bestehen insbesondere darin, dass durch die reibschlüssige Kraftübertragung vom Antriebsriemen auf das schwenkbare Oberteil der Vorrichtung ein wirksamer Überlastschutz gegeben ist. Da zwischen dem Antriebsriemen und dem Oberteil durch Reibung Kräfte nur bis zu einem bestimmten Maximalwert übertragbar sind, ist ein Übersteigen dieses Maximalwerts zuverlässig ausgeschlossen. Das heißt, wenn höhere Kräfte zwischen Antriebsriemen und Oberteil wirken, rutscht das Oberteil am Antriebsriemen durch und eine Beschädigung anderer Bauteile, beispielsweise des Motors oder bestimmter Getriebeteile, ist ausgeschlossen. Zur Einstellung der maximal zwischen Antriebsriemen und Oberteil übertragbaren Kräfte kann insbesondere eine verstellbare Spannrolle eingesetzt werden, die am Antriebsriemen in unterschiedlichen Stellungen zur Anlage bringbar ist. Durch Änderung der Stellung der Spannrolle kann die Spannung des Antriebsriemens verändert werden, worauf sich entsprechend höhere bzw. niedrigere Werte für die reibschlüssig übertragbaren Kräfte ergeben.

Ein weiterer Vorteil der Erfindung besteht insbesondere darin, dass die Kraftübertragung zwischen Antriebseinrichtung und Oberteil wahlweise durch eine Kupplungseinrichtung unterbrochen werden kann. In einem ersten Betriebszustand der Kupplungseinrichtung sind Antriebseinrichtung und Oberteil kinematisch miteinander gekoppelt, so dass jede Lageänderung der Antriebseinrichtung eine Lageänderung des Oberteils und jede Lageänderung des Oberteils eine Lageänderung der Antriebseinrichtung verursacht. In einem zweiten Betriebszustand der Kupplungseinrichtung sind Oberteil und Antriebseinrichtung kinematisch voneinander entkoppelt, so dass Antriebseinrichtung und Oberteil unabhängig voneinander bewegt werden können. Dadurch wird es insbesondere ermöglicht, beim Ausfall der Antriebseinrichtung durch Betätigung der Kupplungseinrichtung das Oberteil von der Antriebseinrichtung zu entkoppeln, so dass das Oberteil von Hand durch das Bedienpersonal verschwenkt werden kann.

Damit die Entkoppelung von Antriebseinrichtung und Oberteil möglichst schnell durchgeführt werden kann, kann bei Vorrichtungen, die unter Flur angeordnet sind, die Kupplungseinrichtung vorzugsweise von der Oberseite der Vorrichtung betätigt werden.

Damit die Kupplungseinrichtung insbesondere auch bei Stromausfall ausgekoppelt werden kann, sollte sie vorzugsweise zumindest auch von Hand betätigbar sein.

Als Kupplungseinrichtung kann insbesondere eine verstellbare Spannrolle eingesetzt werden, die am Antriebsriemen in zumindest zwei Stellungen zur Anlage bringbar ist. Die Spannrolle spannt den Antriebsriemen in der ersten Stellung zumindest so stark, dass eine Antriebskraft reibschlüssig vom Antriebsriemen auf das Oberteil übertragbar ist. In der zweiten Stellung der Spannrolle ist der Riemen zumindest soweit entspannt, dass das Oberteil im wesentlichen ohne Überwindung von zwischen Antriebsriemen und Oberteil wirkenden Reibkräften gegenüber dem Unterteil verschwenkbar ist. Durch die Verstellung der Spannrolle zwischen den beiden Stellungen kann die Antriebseinrichtung ein- bzw. ausgekuppelt werden.

Ein Ausführungsbeispiel der Erfindung ist in den Zeichnungen dargestellt und wird im folgenden näher beschrieben.

Es zeigen:
- Fig. 1: eine schematisch dargestellte Vorrichtung in Ansicht von oben;
- Fig. 2: den Riemenantrieb der Vorrichtung gemäß Fig. 1 in Ansicht von oben;
- Fig. 3: den Riemenantrieb gemäß Fig. 2 im Querschnitt entlang der Schnittlinie I - I.

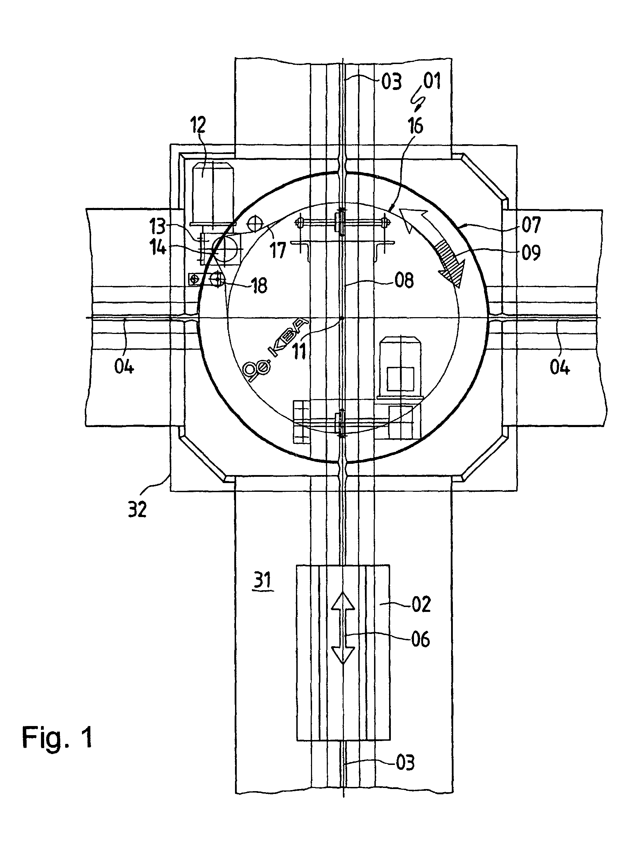

In Fig. 1 ist eine Vorrichtung 01 zur Richtungsänderung von Transportmitteln 02, beispielsweise schienengeführte Transportwagen 02, auf denen liegende Vorratsrollen transportiert werden können, dargestellt. Die Vorrichtung 01 ist in einer Vertiefung 32 eines Grundkörpers 31 im Kreuzungsbereich zweier sich kreuzender Gleisstränge 03 und 04 angeordnet. In den Gleissträngen 03 und 04 kann das Transportmittel 02, auf dem eine Vorratsrolle liegend transportiert werden kann, in Längsrichtung verfahren werden, was durch den Richtungspfeil 06 in Fig. 1 angedeutet ist.

Zur Umsetzung des Transportmittels 02 vom Gleisstrang 03 auf den Gleisstrang 04 bzw. umgekehrt kann ein drehbar gelagertes Oberteil 07 der Vorrichtung 01, an dem ein Schienenstück 08 zur Aufnahme des Transportmittels 02 vorgesehen ist, so lange entsprechend dem Richtungspfeil 09 verschwenkt werden, bis das Schienenstück 08 mit dem Gleisstrang 03 bzw. 04 fluchtet. Dann wird das Transportmittel 02 so weit verfahren, bis es vollständig auf dem Oberteil 07 der Vorrichtung 01 angeordnet ist. Anschließend kann das Oberteil 07 um 90°, oder falls zur Ausrichtung der Vorratsrollen in einer bestimmten Längsrichtung erforderlich, um 180° oder 270°, verschwenkt werden. Damit fluchtet das Schienenstück 08 mit dem Gleisstrang 04 und kann in Richtung des Gleisstrangs 03 bzw. 04 weitergefördert werden.

Zum Antrieb des Oberteils 07, das um eine Mittelachse 11 drehbar auf einem in Fig. 1 nicht dargestellten und mit dem Grundkörper 31 fest verbundenen Unterteil gelagert ist, kann ein Antriebsmotor 12 eingesetzt werden. An der Abtriebsseite des Antriebsmotors 12, z. B. ein Elektromotor 12, ist ein Getriebe 13 und ein Antriebsritzel 14 vorgesehen. Auf der Unterseite des Oberteils 07 ist dem Antriebsritzel 14 gegenüberliegend eine Antriebsscheibe 16 befestigt. Zur Übertragung des vom Antriebsmotor 12 an der Abtriebsseite zur Verfügung gestellten Drehmoments wird am Antriebsritzel 14 ein Riemen 17, beispielsweise ein Zahnriemen 17, formschlüssig in Eingriff gebracht. Der Riemen 17 liegt seinerseits auf der glattflächigen Umfangsfläche der Antriebsscheibe 16 an und überträgt die Antriebsleistung aufgrund der zwischen Umfangsfläche und Riemen 17 wirkenden Reibungskräfte kraftschlüssig.

Zur Einstellung der Spannung des Riemens 17, mit der der Riemen 17 über das Antriebsritzel 14 und die Antriebsscheibe 16 gespannt ist, kann eine schwenkbar gelagerte Spannrolle 18 gegen den Riemen 17 gedrückt werden.

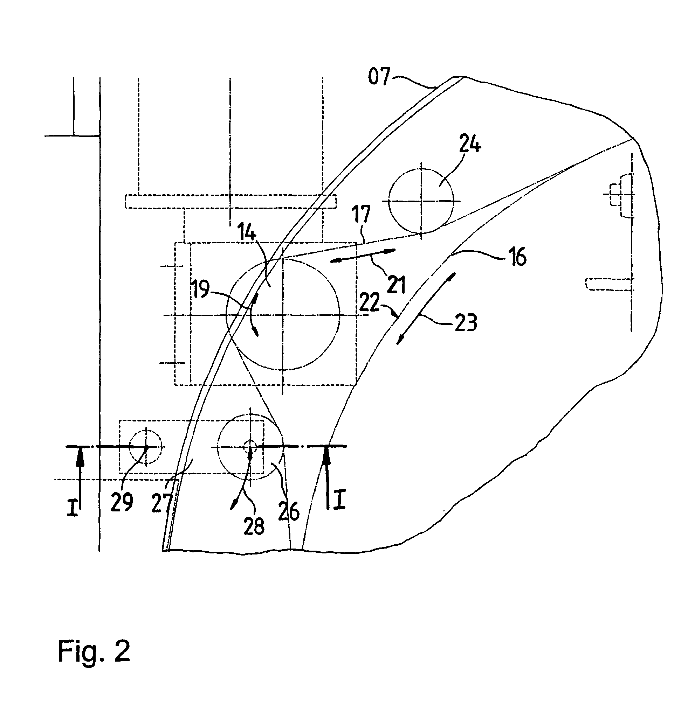

Fig. 2 sind die Hauptkomponenten des Riemenantriebs der Vorrichtung 01 in Ansicht von oben zu entnehmen. Der Riemen 17 kommt mit seiner Innenseite formschlüssig mit der Umfangsfläche des Antriebsritzels 14 in Eingriff, so dass durch rotatorischen Antrieb des Antriebsritzels 14 gemäß einem Richtungspfeil 19 eine vorwärts bzw. rückwärts gerichtete Stellbewegung des Riemens 17, die durch einen Richtungspfeil 21 angedeutet ist, bewirkt werden kann. Der Riemen 17 seinerseits kommt an der glattflächigen Umfangsfläche 22 der Antriebsscheibe 16 zur Anlage. Von der Innenseite des Riemens 17 wird die Antriebsscheibe 16 reibschlüssig angetrieben, so dass im Ergebnis eine Schwenkbewegung der Antriebsscheibe 16 und des oberhalb der Antriebsscheibe 16 angeordneten Oberteils 07 entsprechend einem Richtungspfeil 23 bewirkbar ist. Auch kann die Antriebseinrichtung 12, 13, 14 reibschlüssig und die Antriebsscheibe 16 formschlüssig mit dem Riemen 17 verbunden sein.

Der Riemen 17 wird durch eine Umlenkrolle 24 und eine Spannrolle 26 zwischen dem Antriebsritzel 14 und der Antriebsscheibe 16 umgelenkt. Die Spannrolle 26 ist drehbar auf einem Schwenkarm 27 gelagert. Der Schwenkarm 27 kann entsprechend einem Richtungspfeil 28 um eine Achse 29 verschwenkt werden. Je nach Zustellung des Schwenkarms 27 wird die Spannrolle 26 mit höherem bzw. niedrigerem Druck gegen den Riemen 17 gedrückt, so dass dadurch die Spannung des Riemens 17 veränderbar ist.

Die vom Riemen 17 auf die Antriebsscheibe 16 übertragbaren Reibkräfte korrelieren unmittelbar mit der durch die Spannrolle 26 beeinflussbaren Spannung des Riemens 17. Daraus folgt, dass bei entsprechender Entspannung des Riemens 17 durch das Nachaußen-Schwenken der Spannrolle 26 die maximal zwischen Riemen 17 und Antriebsscheibe 16 übertragbare Antriebsleistung veränderbar ist. Sobald der Riemen 17 so weit entspannt ist, dass er im wesentlichen ohne Anpressdruck auf der Umfangsfläche 22 der Antriebsscheibe 16 anliegt, kann keine Antriebsleistung mehr von Antriebsritzel 14 auf die Antriebsscheibe 16 übertragen werden.

Im Ergebnis kann deshalb die Spannrolle 26 durch Verschwenken des Schwenkarms 27 nach außen in der Art einer Kupplungseinrichtung verwendet werden. Durch entsprechende Spannung des Riemens 17 liegt nämlich der Riemen 17 mit einem so hohen Anpressdruck an der Umfangsfläche 22 der Antriebsscheibe 16 an, dass im Ergebnis das Oberteil 07 nur bei gleichzeitiger Drehung des Antriebsritzels 14 verschwenkt werden kann. Wird die Spannrolle 26 durch Verschwenken des Schwenkarms 27 verstellt, so dass der Riemen 17 im wesentlichen nicht mehr gespannt ist, kann die Antriebsscheibe 16 im wesentlichen widerstandsfrei an dem Riemen 17 entlanggleiten, so dass beispielsweise das Oberteil 07 von Hand verschwenkt werden kann, ohne dass sich das Antriebsritzel 14 mitdrehen muss.

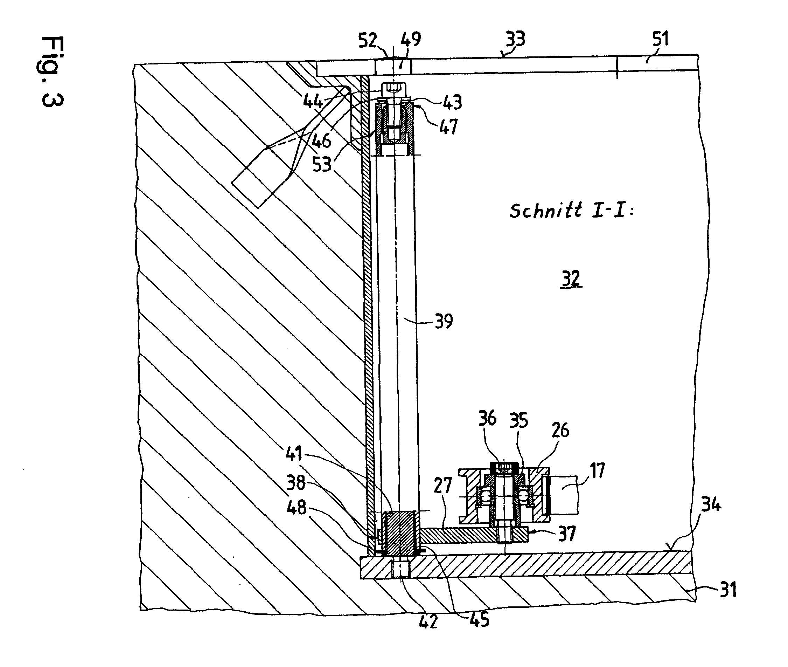

In Fig. 3 ist die Funktion zur Verstellung der Spannrolle 26 dargestellt. Damit die Vorrichtung 01 unter Flur anordenbar ist, ist im Grundkörper 31, beispielsweise einem Fundament, eine in Fig. 3 lediglich ausschnitthaft dargestellte Vertiefung 32 vorgesehen, in der die Vorrichtung 01 so angeordnet werden kann, dass die Oberseite des Oberteils 07 sich im wesentlichen in der von der Oberseite des Grundkörpers 31 definierten Horizontalebene 33 erstreckt. Die Antriebseinrichtung der Vorrichtung 01, im wesentlichen bestehend aus dem Antriebsmotor 12, dem Getriebe 13 und dem Antriebsritzel 14, ist bei der dargestellten Ausführungsform ebenfalls in der Vertiefung 32 angeordnet, wobei der Antriebsmotor 12 am Boden 34 der Vertiefung 32 befestigt ist.

Die Spannrolle 26 ist mit einem Wälzlager 35 auf einem Bolzen 36 drehbar gelagert. Der Bolzen 36 seinerseits ist an einem Ende 37 des Schwenkarms 27 in den Schwenkarm 27 eingeschraubt. Das gegenüberliegende Ende 38 des Schwenkarms 27 weist eine Ausnehmung auf, in der eine beispielsweise als Rohr ausgebildete Hülse 39 befestigbar ist. Die Hülse 39 wird in ihrem Inneren der Länge nach von einer Achse 41 durchgriffen. Das untere Ende 42 der Achse 41 ist mit einem Kleber in eine Ausnehmung des Grundkörpers 31, das als Verankerungselement dient, eingeklebt. Am oberen Ende 43 der Achse 41 kann ein Spannelement 44, das bei der dargestellten Ausführungsform in der Art einer Spannschraube 44 ausgebildet ist, durch Einschrauben der Spannschraube 44 betätigt werden. Ab einer bestimmten Einschraubtiefe kommt das Spannelement 44 vermittelt durch eine Unterlegscheibe 46 am oberen Ende 47 der Hülse 39 zur Anlage. Durch weiteres Zustellen des Spannelements 44 wird der Abstand zwischen dem Boden 34 und der Unterseite der Unterlegscheibe 46 zunehmend verkürzt, so dass im Ergebnis die Hülse 39 durch Zustellung des Spannelements 44 zwischen der Unterlegscheibe 46 und dem Grundkörper 31 beklemmt werden kann. Damit die aufgebrachte Klemmkraft mit zunehmender Zustellung des Spannelements 44 möglichst kontinuierlich und nicht sprunghaft ansteigt, ist zwischen dem unteren Ende 45 der Hülse 39 und dem Boden 34 ein elastisches Element 48, beispielsweise eine Gummischeibe 48, angeordnet, die beim Beklemmen der Hülse 39 elastisch verpresst wird.

Zur Veränderung der Spannung des Riemens 17 wird das Spannelement 44 so weit gelöst, dass die Hülse 39 auf der Achse 41 verdreht werden kann. Dadurch verändert sich die Lage der Spannrolle 26 relativ zum Riemen 17, so dass die gewünschte Riemenspannung einstellbar ist. Damit die im wesentlichen von der Spannrolle 26, dem Schwenkarm 27, der Hülse 39 und der Achse 41 gebildete Kupplungseinrichtung einfach und im wesentlichen ohne Demontage von anderen Bauteilen betätigbar ist, ist oberhalb des Spannelements 44 eine Ausnehmung 49 in einer Abdeckplatte 51 vorgesehen, mit der die Vertiefung 32 abgedeckt werden kann. Durch die Ausnehmung 49 kann ein Werkzeug, beispielsweise ein Steckschlüssel, durchgesteckt werden und so das Spannelement 44 betätigt werden.

Zur Einstellung der Spannung des Riemens 17 ist es vorteilhaft, wenn zur Verstellung des Schwenkarms 27 das Spannelement 44 nicht vollständig gelöst werden muss, da ansonsten bei der Justierung des Schwenkarms 27 zugleich die Hülse 39 festgehalten und das Spannelement 44 angezogen werden muss. Deshalb sind am oberen Ende 47 der Hülse 39 Werkzeugwirkflächen 53 vorgesehen, beispielsweise in der Art eines Sechskantes 53, an denen ein Werkzeug zur Verdrehung der Hülse 39 zum Eingriff gebracht werden kann. Zur Verstellung des Schwenkarms 27 wird das Spannelement 44 dann nur so weit gelöst, dass die Hülse 39 unter Zuhilfenahme eines Werkzeuges, beispielsweise einer Sechskantnuss, verdreht werden kann. Nach Justierung des Schwenkarms 27 wird das Spannelement 44 wieder so stark angezogen, dass die Hülse 39 mit ausreichender Kraft beklemmt ist. Die Ausnehmung 49 in der Abdeckplatte 51 kann anschließend mit einem entsprechend geformten Abdeckelement 52 verschlossen werden.

Im Ergebnis kann die Kupplungseinrichtung, die von der Spannrolle 26, dem Schwenkarm 27, der Hülse 39 und der Achse 41 gebildet wird, also von Hand durch Lösen bzw. Zustellen des Spannelements 44 und anschließendes Verdrehen der Hülse 39 betätigt werden. Dadurch ist sichergestellt, dass die von dem Antriebsmotor 12, dem Getriebe 13 und dem Antriebsritzel 14 gebildete Antriebseinrichtung jederzeit, insbesondere auch bei Ausfall der Antriebseinrichtung, vom Oberteil 07 der Vorrichtung 01 entkoppelt werden kann, so dass das Oberteil 07 durch das Bedienpersonal manuell verschwenkbar ist.

Da sich Hülse 39 und Achse 41 bis kurz unter die Abdeckplatte 51 nach oben erstrecken, kann die Kupplungseinrichtung betätigt werden, ohne dass, abgesehen von dem Abdeckelement 52, andere Bauteile demontiert werden müssten.

Das Transportmittel 02 ist als schienengeführter Transportwagen 02 zur Aufnahme von Papierrollen zum Transport zu einem Rollenwechsler einer Rotationsdruckmaschine ausgebildet.

### Bezugszeichenliste

- 01: Vorrichtung
- 02: Transportmittel, schienengeführter Transportwagen
- 03: Gleisstrang
- 04: Gleisstrang
- 05: -
- 06: Richtungspfeil (02)
- 07: Oberteil (01)
- 08: Schienenstück
- 09: Richtungspfeil (07)
- 10: -
- 11: Mittelachse
- 12: Antriebsmotor, Elektromotor
- 13: Getriebe
- 14: Antriebsritzel
- 15: -
- 16: Antriebsscheibe
- 17: Riemen, Zahnriemen
- 18: Spannrolle
- 19: Richtungspfeil (14)
- 20: -
- 21: Richtungspfeil (17)
- 22: Umfangsfläche (16)
- 23: Richtungspfeil (16)
- 24: Umlenkrolle
- 25: -
- 26: Spannrolle
- 27: Schwenkarm
- 28: Richtungspfeil (27)
- 29: Achse
- 30: -
- 31: Grundkörper
- 32: Vertiefung
- 33: Horizontalebene
- 34: Boden
- 35: Wälzlager
- 36: Bolzen
- 37: Ende (27)
- 38: Ende (27)
- 39: Hülse
- 40: -
- 41: Achse
- 42: Ende (41)
- 43: Ende (41)
- 44: Spannelement, Spannschraube
- 45: Ende (39)
- 46: Unterlegscheibe
- 47: Ende (39)
- 48: Element, elastisch, Gummischeibe
- 49: Ausnehmung
- 50: -
- 51: Abdeckplatte
- 52: Abdeckelement
- 53: Werkzeugwirkfläche, Sechskant

## Patentansprüche

1. Vorrichtung (01) zur Richtungsänderung von Transportmitteln (02), mit einem Unterteil und einem schwenkbar auf dem Unterteil gelagerten Oberteil (07), wobei das Transportmittel (02) an oder auf dem Oberteil (07) anordenbar ist und das Oberteil (07) durch eine Antriebseinrichtung (12, 13, 14) gegenüber dem Unterteil verschwenkbar ist, wobei die Antriebseinrichtung (12, 13, 14) und das Oberteil (07) durch einen Riemen (17) gekoppelt sind, **dadurch gekennzeichnet, dass** die Antriebseinrichtung (12, 13, 14) formschlüssig und das Oberteil (07) reibschlüssig mit dem Riemen (17) verbunden sind, dass am Oberteil (07) eine Antriebsscheibe (16) mit einer im wesentlichen glattflächigen Umfangsfläche (22) vorgesehen ist, wobei der Riemen (17) reibschlüssig an der Umfangsfläche (22) zur Anlage bringbar ist.

2. Vorrichtung nach Anspruch 1, **dadurch gekennzeichnet, dass** die Antriebseinrichtung (12, 13, 14) einen Antriebsmotor (12) aufweist, dass am Antriebsmotor (12) ein Antriebsritzel (14) vorgesehen ist, das mit dem Riemen (17) formschlüssig in Eingriff bringbar ist.

3. Vorrichtung nach Anspruch 1, **dadurch gekennzeichnet, dass** der Riemen (17) als Zahnriemen (17) ausgebildet ist.

4. Vorrichtung nach einem der Ansprüche 1 bis 3, **dadurch gekennzeichnet, dass** die Spannung des Riemens (17) durch eine am Riemen (17) in unterschiedlichen Stellungen zur Anlage bringbare Spannrolle (26) veränderbar ist, so dass die Antriebseinrichtung (12, 13, 14) und das Oberteil (07) entkoppelbar sind.

5. Vorrichtung (01) nach Anspruch 1, **dadurch gekennzeichnet, dass** eine Kupplungseinrichtung (26, 27, 39, 41, 44) zur wahlweisen Unterbrechung der Kraftübertragung zwischen der Antriebseinrichtung (12, 13, 14) und dem Oberteil (07) angeordnet ist, wobei Antriebseinrichtung (12, 13, 14) und Oberteil (07) in einem ersten Betriebszustand der Kupplungseinrichtung (26, 27, 39, 41, 44) kinematisch miteinander gekoppelt sind und in einem zweiten Betriebszustand der Kupplungseinrichtung (26, 27, 39, 41, 44) kinematisch voneinander entkoppelt sind.

6. Vorrichtung nach Anspruch 5, **dadurch gekennzeichnet, dass** die Vorrichtung (01) in einer Vertiefung (32) eines Grundkörpers (31), insbesondere eines Fundaments, angeordnet ist, wobei die Kupplungseinrichtung (26, 27, 39, 41, 44) von der Oberseite der Vorrichtung (01) aus betätigbar ist.

7. Verrichtung (01) zur Richtungsänderung von Transportmitteln (02), mit einem Unterteil und einem schwenkbar auf dem Unterteil gelagerfen Oberteil (07), wobei das Transportmittel (02) an oder auf dem Oberteil (07) anordenbar ist und das Oberteil (07) durch einer Antriebseinrichtung (12, 13, 14) gegenüber dem Unterteil verschwenkbar ist, wobei eine Kupplungseinrichtung (26, 27, 39, 41, 44) zur wahlweisen Unterbrechung der Kraftübertragung zwischen der Antriebseinrichtung (12, 13, 14) und dem Oberteil (07) angeordnet ist, wobei Antriebseinrichtung (12, 13, 14) und Oberteil (07) In einem ersten Betriebszustand der Kupplungseinrichtung (26, 27, 39, 41, 44) kinematlsch miteinander gekoppelt sind und in einem zweiten Betriebszustand der Kopplungseinrichtung (26, 27, 39, 41, 44) kinematisch voneinander entkoppelt sind, **dadurch gekennzeichnet, dass** die Kupplungseinrichtung (26, 27, 39, 41, 44) eine wahlweise zwischen zumindest zwei Stellungen verstellbare Spannrolle (26) aufweist, wobei die Spannrolle (26) einen Riemen (17) in der ersten Stellung zumindest so stark spannt, dass eine Antriebskraft reibschlüssig vom Riemen (17) auf das Oberteil (07) übertragbar ist, und wobei der Riemen (17) in der zweiten Stellung der Spannrolle (26) zumindest soweit entspannt ist, dass das Oberteil (07) im wesentlichen ohne Überwindung von zwischen Riemen (17) und Oberteil (07) wirkenden Reibkräften gegenüber dem Unterteil verschwenkbar ist, dass die Spannrolle (26) auf einem auf einer Achse (41) verschwenkbaren Schwenkarm (27) gelagert ist, dass das feststehende Ende (42) der Achse (41) am Boden (34) einer Vertiefung (32) befestigt ist, und sich die Achse (41) so weit nach oben erstreckt, dass das Spannelement (44) im wesentlichen ohne Demontage von Bauteilen von der Oberseite der Vorrichtung (01) aus betätigbar ist.

8. Vorrichtung nach Anspruch 7, **dadurch gekennzeichnet, dass** der Schwenkarm (27) in zumindest zwei Stellungen feststellbar ist.

9. Vorrichtung nach Anspruch 8, **dadurch gekennzeichnet, dass** das von der Spannrolle (26) abgewandte Ende (38) des Schwenkarms (27) am Umfang einer Hülse (39) befestigt ist, die im Inneren ihrer Länge nach von der Achse (41) durchgriffen wird, wobei das erste Ende (42) der Achse (41) feststehend an einem Verankerungselement, insbesondere dem Grundkörper (31), befestigt ist und am zweiten Ende (43) der Achse (41) ein Spannelement (44) angeordnet ist, das mittelbar oder unmittelbar an der Hülse (39) zur Anlage bringbar ist, wobei durch Betätigung des Spannelements (44) die Hülse (39) zwischen dem Spannelement (44) und dem Verankerungselement beklemmbar ist.

10. Vorrichtung nach Anspruch 9, **dadurch gekennzeichnet, dass** an der Hülse (39) Werkzeugwirkflächen (53) vorgesehen sind, an denen ein Werkzeug zur Verstellung der Hülse (39) relativ zur Achse (41) zum Eingriff bringbar ist.

11. Vorrichtung nach den Ansprüchen 9 oder 10, **dadurch gekennzeichnet, dass** das Spannelement (44) eine Spannschraube (44) aufweist, die in das Ende der Achse (41) einschraubbar und mittelbar oder unmittelbar an einem Ende (47) der Hülse (39) zur Anlage bringbar ist, wobei die Hülse (39) durch Einschrauben der Spannschraube (44) in die Achse (41) zwischen dem Verankerungselement, insbesondere dem Grundkörper (31), und der Spannschraube (44) beklemmbar ist.

12. Vorrichtung nach einem der Ansprüche 9 bis 11, **dadurch gekennzeichnet, dass** das Spannelement (44) durch eine Ausnehmung (49) in einer Abdeckplatte (51), mit der eine Vertiefung (32) zumindest bereichsweise abgedeckt werden kann, betätigbar ist.

13. Vorrichtung nach einem der Ansprüche 10 bis 12, **dadurch gekennzeichnet, dass** ein Werkzeug durch eine Ausnehmung (49) in einer Abdeckplatte (51), mit der die Vertiefung (32) zumindest bereichsweise abgedeckt werden kann, an den dafür vorgesehenen Werkzeugwirkflächen (53) der Hülse (39) zum Eingriff bringbar ist.

14. Vorrichtung nach den Ansprüchen 12 oder 13, **dadurch gekennzeichnet, dass** die Ausnehmung (49) in der Abdeckplatte (51) durch ein Abdeckelement (52) verschließbar ist.

15. Vorrichtung nach einem der Ansprüche 9 bis 14, **dadurch gekennzeichnet, dass** zwischen dem Verankerungselement, insbesondere dem Grundkörper (31), und der Stirnfläche an einem Ende (45) der Hülse (39) eine elastisches Element (48) angeordnet ist.

16. Vorrichtung nach einem der Ansprüche 9 bis 15, **dadurch gekennzeichnet, dass** das erste Ende (42) der Achse (41) in das Verankerungselement, insbesondere in den Grundkörper (31), eingeklebt ist.

17. Vorrichtung nach Anspruch 1, **dadurch gekennzeichnet, dass** das Oberteil (07) ein Schienenstück (08) zur Aufnahme der schienengeführten Transportmittel (02) aufweist.

18. Vorrichtung nach Anspruch 1, **dadurch gekennzeichnet, dass** das Transportmittel (02) als schienengeführter Transportwagen (02) zur Aufnahme von Vorratsrollen zum Transport zu einer Rotationsdruckmaschine ausgebildet ist.

19. Vorrichtung nach Anspruch 5 oder 7, **dadurch gekennzeichnet, dass** die Kupplungseinrichtung (26, 27, 39, 41, 44) von Hand betätigbar ist.

## Claims

1. Arrangement (01) for changing the direction of transporter means (02), having a bottom part and a top part (07) pivotably mounted on the bottom part, the transporter means (02) being arrangable on the top part (07) and the top part (07) being pivotable relative to the bottom part by a drive means (12, 13, 14), the drive means (12, 13, 14) and the top part (07) being coupled by a belt (17), **characterised in that** the drive means (12, 13, 14) is connected to the belt (17) by positive interengagement and the top part (07) is connected thereto by frictional engagement, and **in that** there is provided on the top part (07) a driven disc (16) having a substantially smooth-faced circumferential surface (22), it being possible for the belt (17) to be brought to bear against the circumferential surface (22) by frictional engagement.

2. Arrangement according to claim 1, **characterised in that** the drive means (12, 13, 14) has a drive motor (12), and **in that** there is provided on the drive motor (12) a drive pinion (14) that can be brought into positive interengagement with the belt (17).

3. Arrangement according to claim 1, **characterised in that** the belt (17) is in the form of a toothed belt (17).

4. Arrangement according to one of claims 1 to 3, **characterised in that** the tension on the belt (17) can be varied by a tensioning roller (26) able to be brought to bear against the belt (17) in different positions, thus enabling the drive means (12, 13, 14) and the top part (07) to be uncoupled.

5. Arrangement (01) according to claim 1, **characterised in that** a coupling means (26, 27, 38, 41, 44) to allow the transmission of force to be interrupted if desired is arranged between the drive means (12, 13, 14) and the top part (07), the drive means (12, 13, 14) and the top part (07) being coupled together kinematically in a first operating state of the coupling means (26, 27, 39, 41, 44) and being uncoupled from one another kinematically in a second operating state of the coupling means (26, 27, 39, 41, 44).

6. Arrangement according to claim 5, **characterised in that** the arrangement (01) is arranged in a recess (32) in a main body (31), and in particular a foundation, the coupling means (26, 27, 39, 41, 44) being able to be operated from the top face of the arrangement (01)

7. Arrangement (01) for changing the direction of transporter means (02), having a bottom part and a top part (07) pivotably mounted on the bottom part, the transporter means (02) being arrangable on the top part (07) and the top part (07) being pivotable relative to the bottom part by a drive means (12, 13, 14), a coupling means (26, 27, 38, 41, 44) to allow the transmission of force to be interrupted if desired being arranged between the drive means (12, 13, 14) and the top part (07), the drive means (12, 13, 14) and the top part (07) being coupled together kinematically in a first operating state of the coupling means (26, 27, 39, 41, 44) and being uncoupled from one another kinematically in a second operating state of the coupling means (26, 27, 39, 41, 44, **characterised in that** the coupling means (26, 27, 39, 41, 44) has a tensioning roller (26) which can be adjusted as desired between at least two positions, the tensioning roller (26) tensioning a belt (17), in the first position, at least sufficiently powerfully to allow a drive force to be transmitted from the belt (17) to the top part (07) by frictional engagement, and the belt (17) being relaxed, in the second position of the tensioning roller, at least sufficiently to allow the top part (07) to be pivoted in relation to the bottom part substantially without frictional forces acting between the belt (17) and the top part (07) having to be overcome, **in that** the tensioning roller (26) is mounted on a pivoting arm (27) which is pivotable on a shaft (41), and **in that** the fixed end (42) of the shaft (41) is fastened to the floor (34) of a recess (32) and the shaft (41) extends upwards sufficiently far for the clamping member (44) to be operable from the top face of the arrangement (01) substantially without any components having to be stripped off.

8. Arrangement according to claim 7, **characterised in that** the pivoting arm (27) can be locked in at least two positions.

9. Arrangement according to claim 8, **characterised in that** the end (38) of the pivoting arm (27) remote from the tensioning roller (26) is fastened to the circumference of a sleeve (39) through whose interior the shaft (41) passes lengthwise, the first end (42) of the shaft (41) being fastened to an anchorage member to be stationary and there being arranged at the second end (43) of the shaft (41) a clamping member (44) that can be brought to bear against the sleeve (39) directly or indirectly, the sleeve (39) being clampable between the clamping member (44) and the anchorage member by operating the clamping member (44).

10. Arrangement according to claim 9, **characterised in that** there are provided on the sleeve (39) faces (53) for a tool to act on, with which a tool for adjusting the sleeve (39) relative to the shaft (41) can be engaged.

11. Arrangement according to claim 9 or 10, **characterised in that** the clamping member (44) has a clamping screw (44) which can be screwed into the end of the shaft (41) and can be brought to bear directly or indirectly against one end (47) of the sleeve (39), the sleeve (39) being clampable between the anchorage member, and particularly the main body (31), and the clamping screw 44 by screwing the clamping screw (44) into the shaft (41).

12. Arrangement according to one of claims 9 to 11, **characterised in that** the clamping member (44) can be operated through a cut-out (49) in a cover plate (51) by which at least a region of the recess (32) can be covered.

13. Arrangement according to one of claims 10 to 12, **characterised in that** a tool can be engaged with the faces (53) for a tool to act on on the sleeve (53), which faces (53) are intended for it, through a cut-out (49) in a cover plate (51) by which at least a region of the recess (32) can be covered.

14. Arrangement according to claim 12 or 13, **characterised in that** the cut-out (49) in the cover plate (51) can be closed off by a covering member (52).

15. Arrangement according to one of claims 9 to 14, **characterised in that** a resilient member (48) is arranged between the anchorage member, and in particular the main body (31), and the end face at one end (45) of the sleeve (39).

16. Arrangement according to one of claims 9 to 15, **characterised in that** the first end (42) of the shaft (41) is bonded into the anchorage member, and in particular into the main body (31).

17. Arrangement according to claim 1, **characterised in that** the top part (07) has a section of rail (08) to receive the rail-borne transporter means (02).

18. Arrangement according to claim 1, **characterised in that** the transporter means (02) are in the form of rail-borne transporter trolleys (02) to receive supply reels for transportation to a rotary printing press.

19. Arrangement according to claim 5 or 7, **characterised in that** the coupling means (26, 27, 39, 41, 44) can be operated by hand.

## Revendications

1. Dispositif (01), pour le changement de direction de moyens de transport (02), avec une partie inférieure et une partie supérieure (07), montée de façon à pouvoir pivoter sur la partie inférieure, le moyen de transport (02) étant susceptible d'être disposé à ou sur la partie supérieure (07), et la partie supérieure (07) étant susceptible de pivoter par rapport à la partie inférieure au moyen d'un dispositif d'entraînement (12, 13, 14), le dispositif d'entraînement (12, 13, 14) et la partie supérieure (07) étant couplés au moyen d'une courroie (17), **caractérisé en ce que** le dispositif d'entraînement (12, 13, 14) est relié à la courroie (17) par une liaison à ajustement de forme et la partie supérieure (07) est reliée à la courroie (17) par une liaison à friction, **en ce que**, sur la partie supérieure (07), est prévu un disque d'entraînement (16), ayant une surface périphérique (22) sensiblement lisse, la courroie (17), étant susceptible d'être mise en appui sur la surface périphérique (22), en faisant intervenir une liaison par friction.

2. Dispositif selon la revendication 1, **caractérisé en ce que** le dispositif d'entraînement (12, 13, 14) présente un moteur d'entraînement (12), **en ce que**, sur le moteur d'entraînement (12), est prévu un pignon d'entraînement (14), susceptible d'être mis en prise par une liaison à ajustement de forme avec la courroie (17).

3. Dispositif selon la revendication 1, **caractérisé en ce que** la courroie (17) est réalisée sous la forme de courroie dentée (17).

4. Dispositif selon l'une des revendications 1 à 3, **caractérisé en ce que** la tension de la courroie (17) est modifiable au moyen d'un galet-tendeur (26), susceptible d'être mis en appui en différentes positions sur la courroie (17), de manière que le dispositif d'entraînement (12, 13, 14) et la partie supérieur (07) soient susceptible d'être désaccouplés.

5. Dispositif (01) selon la revendication 1, **caractérisé en ce qu'**un dispositif d'accouplement (26, 27, 39, 41, 44) est disposé pour interrompre au choix la transmission d'effort entre le dispositif d'entraînement (12, 13, 14) et la partie supérieurs (07), le dispositif d'entraînement (12, 13, 14) et la partie supérieure (07) étant couplées ensemble cinématiquement en un premier état de fonctionnement du dispositif d'accouplement (26, 27, 39, 41, 44), et étant désaccouplés l'un de l'autre cinématiquement en un deuxième état de fonctionnement du dispositif d'accouplement (26, 27, 39, 41, 44).

6. Dispositif selon la revendication 5, **caractérisé en ce que** le dispositif (01) est disposé dans une cavité (32) d'un corps de base (31), en particulier d'une fondation, le dispositif d'accouplement (26, 27, 39, 41, 44) étant susceptible d'être actionné depuis la face supérieure du dispositif (01).

7. Dispositif (01), pour la modification directionnelle de moyens de transport (02), avec une partie inférieure et une partie supérieure (07), montée à pivotement sur la partie inférieure, le moyen de transport (02) étant disposé à ou sur la partie supérieure (07), et la partie supérieure (07), étant susceptible de pivoter par rapport à a partie inférieur, au moyen d'un dispositif d'entraînement (12, 13, 14), un dispositif d'accouplement (26, 27, 39, 41, 44) étant disposé pour interrompre au choix la transmission des efforts entre le dispositif d'entraînement (12, 13, 14) et la partie supérieure (07), le dispositif d'entraînement (12, 13, 14) et la partie supérieure (07) étant couplés ensemble cinématiquement en un premier état de fonctionnement du dispositif d'accouplement (26, 27, 39, 41, 44), et étant désaccouplés l'un de l'autre cinématiquement en un deuxième état de fonctionnement du dispositif d'accouplement (26, 27, 39, 41, 44), **caractérisé en ce que** le dispositif d'accouplement (26, 27, 39, 41, 44) présente un galet-tendeur (26), réglable au choix entre au moins deux positions, le galet-tendeur (26), à la première position une courroie (17), tendant au moins si fortement qu'une force d'entraînement est susceptible d'être transmise par une liaison par friction, de la courroie (17) à la partie supérieure (7), et la courroie (17), lorsque le galet-tendeur (26) est à la deuxième position, est détendue au moins à un degré faisant que la partie supérieur (07) est susceptible de pivoter par rapport à la partie inférieure, pratiquement sans avoir à surmonter d'effort de friction, agissant entre la courroie (17) et la partie supérieure (07), **en ce que** le galet-tendeur (26) est monté à rotation sur un bras pivotant (27) susceptible de pivoter sur un axe (41), **en ce que** l'extrémité stationnaire (42) de l'axe (41) est fixée au fond (34) d'une cavité (32), et **en ce que** l'axe (41) s'étend vers le haut, d'une distance faisant que l'élément tendeur (44) peut être actionné depuis la face supérieure du dispositif (01), pratiquement sans à avoir à démonter aucun des composants.

8. Dispositif selon la revendication 7, **caractérisé en ce que** le bras pivotant (27) est susceptible d'être fixé en au moins deux positions.

9. Dispositif selon la revendication 8, **caractérisé en ce que** l'extrémité (38), opposée au galet-tendeur (26), du bras pivotant (27) est fixée à la périphérie d'une douille (39), traversée sur sa longueur, intérieurement, par l'axe (41), la première extrémité (42) de l'axe (41) étant fixée, de façon stationnaire, à un élément d'ancrage, en particulier au corps de base (31), et, à la deuxième extrémité (43) de l'axe (41), étant fixé un élément tendeur (44), susceptible de venir en appui, indirectement ou directement sur la douille 39, sachant que, par actionnement de l'élément tendeur (44), la douille (39) peut être serrée entre l'élément tendeur (44) et l'élément d'ancrage.

10. Dispositif selon la revendication 9, **caractérisé en ce que**, sur la douille (39), sont prévues des faces actives pour outil (53), sur lesquelles un outil peut être mis en prise pour effectuer une manoeuvre de réglage de la douille (39) par rapport à l'axe (41).

11. Dispositif selon la revendication 9 ou 10, **caractérisé en ce que** l'élément tendeur (44) présente une vis de serrage (44), qui peut être vissée dans l'extrémité de l'axe (41) et peut être mise en appui, indirectement ou directement, sur une extrémité (47) de la douille (39), la douille (39) étant susceptible d'être serrée par vissage de la vis de serrage (44) dans l'axe (41), entre l'élément d'ancrage, en particulier le corps de base (31), et la vis de serrage (44).

12. Dispositif selon l'une des revendications 9 à 11, **caractérisé en ce que** l'élément de serrage (44) est susceptible d'être actionné au moyen d'un évidement (49), ménagé dans une plaque de recouvrement (51), avec laquelle une cavité (32) peut être recouverte au moins par zones.

13. Dispositif selon l'une des revendications 10 à 12, **caractérisé en ce qu'**un outil peut être mis en prise au moyen d'un évidement (49), ménagé dans une plaque de recouvrement (51), avec laquelle la cavité (32) peut être recouverte au moins par zones, sur les faces actives pour outil (53), prévues pour cela, de la douille (39).

14. Dispositif selon la revendication 12 ou 13, **caractérisé en ce que** l'évidement (49), ménagé dans la plaque de recouvrement (51), peut être obturé par un élément de recouvrement (52).

15. Dispositif selon l'une des revendications 9 à 14, **caractérisé en ce qu'**un élément (48) élastique est disposé entre l'élément d'ancrage, en particulier le corps de base (31) et la face frontale, sur une extrémité (45) de la douille (39).

16. Dispositif selon l'une des revendications 9 à 15, **caractérisé en ce que** la première extrémité (42) de l'axe (41) est introduite et collée dans l'élément d'ancrage, en particulier dans le corps de base (31).

17. Dispositif selon la revendication 1, **caractérisé en ce que** la partie supérieure (07) présente une pièce formant rail (08), devant supporter les moyens de transport (02), guidés sur rails.

18. Dispositif selon la revendication 1, **caractérisé en ce que** le moyen de transport (02) est réalisé sous la forme de chariot de transport (02) guidé sur rails, devant supporter des rouleaux de réserve, à transporter à une machine à imprimer rotative.

19. Dispositif selon la revendication 5 ou 7, **caractérisé en ce que** le dispositif d'accouplement (26, 27, 39, 41, 44) est actionnable manuellement.
